# EUROPÄISCHE PATENTSCHRIFT

(11) **EP 0 950 813 B1**
(45) Veröffentlichungstag und Bekanntmachung des Hinweises auf die Patenterteilung: **06.07.2005**
(21) Anmeldenummer: 99105952.8
(22) Anmeldetag: 24.03.1999
(51) Int. Cl.: F04B 1/20

(54) **Axialkolbenmaschine mit einer in einem Schwenklager schwenkbar gelagerten Schrägscheibe**
Swivel bearing for a swash plate in an axial piston machine
Palier pivotant d'un plateau en biais dans une machine à pistons axiaux

(30) Priorität: 16.04.1998 DE 19816926
(43) Veröffentlichungstag der Anmeldung: 20.10.1999
(73) Patentinhaber: Brueninghaus Hydromatik GmbH, 89275 Elchingen (DE)
(72) Erfinder: Lemmen, Ralf, Dr., 72072 Tübingen (DE)
(74) Vertreter: Körfer, Thomas, Dipl.-Phys.

(56) Entgegenhaltungen:
- EP-A- 0 237 750
- DE-A- 2 100 028
- DE-C- 19 538 835
- US-A- 5 017 095

## Beschreibung

Die Erfindung bezieht sich auf eine Axialkolbenmaschine nach dem Oberbegriff des Anspruchs 1, wie sie z. B. in der DE 195 38 835 C1 oder EP 0 327 012 B1 beschrieben ist.

Bei einer Axialkolbenmaschine dieser Bauart ist das Schwenklager im Funktionsbetrieb großen Belastungen ausgesetzt. Dies ist zum einen durch die Bauweise bedingt, da im Funktionsbetrieb alle Kolben der Hochdruckseite axial an der Schrägscheibe abgestützt sind und deshalb das Schwenklager große Lagerkräfte aufzunehmen hat. Bei Axialkolbenmaschinen, deren Schrägscheibe im Funktionsbetrieb, d. h. unter Last verstellbar ist, bedarf es außerdem großer Verstellkräfte, um die Schrägscheibe verstellen zu können und das Durchsatzvolumen der Axialkolbenmaschine einstellen zu können. Um die Flächenpressung an den Lagerkorpern des Schwenklagers möglichst gering zu halten, ist man bereits dazu übergegangen, das Schwenklager im Sinne einer sogenannten Wiege mit einem verhältnismäßig großen Radius zylinderabschnittförmig auszubilden, so daß zu beiden Seiten der Drehachse der Axialkolbenmaschine sich etwa über die gesamte Querschnittsabmessung erstreckende zylinderabschnittförmige Lagerflächen zur Verfügung stehen. Die Flächenpressung läßt sich weiter reduzieren, wenn das Schwenklager als Gleitlager ausgebildet ist, dessen Lagerflächen im Funktionsbetrieb gleitend aneinanderliegen. Bei einem Gleitlager sind die beim Verstellen der Schragscheibe zu überwindenden Reibungskräfte jedoch verhältnismäßig groß. Deshalb hat man das Schwenklager bereits als Wälzlager mit zwischen den zylinderabschnittförmigen Lagerflächen angeordneten Wälzkörpern ausgebildet (DE 195 38 835 C1), die aufgrund einer im Funktionsbetrieb stattfindenden Rollreibung eine leichtere Verstellung der Axialkolbenmaschine ermöglichen, insbesondere unter Last. Bei einem als Wälzlager ausgebildeten Schwenklager werden die Lagerflächen jedoch nur punktformig bei kugelförmigen oder linienförmig bei walzenförmigen Wälzkörpern belastet, so daß sich im Funktionsbetrieb große Flächenpressungen ergeben, die zu einem erhöhten Verschleiß und zu einer geringeren Standzeit des Schwenklagers führen, wenn nicht hochwertige Werkstoffe verwendet werden, die teuer sind. Ein erheblicher Nachteile liegt ferner darin, daß der Lagerkörper der wiegenartigen Schragscheibe und der Lagerkörper des Gehäuses einen exakt aufeinander abgestimmten Krümmungsradius aufweisen müssen, wobei sich die Krümmungsradien auch bei großer Last nicht wesentlich ändern dürfen.

Bei der in der EP 0 327 012 B1 beschriebenen Axialkolbenmaschine ist die hohlzylindrische Lagerfläche des gehauseseitigen Lagerkörpers des Schwenklagers zwecks Verbesserung der Gleiteigenschaft und Verringerung des Verschleißes mit einem verstärkten Kunststoffbelag ausgelegt.

Der Erfindung liegt die Aufgabe zugrunde, bei einer Axialkolbenmaschine der eingangs angegebenen Art die Lagerung der Schrägscheibe zu verbessern.

Diese Aufgabe wird durch die Merkmale des Anspruchs 1 gelöst. Vorteilhafte Weiterbildungen der Erfindung sind in den Unteransprüchen beschrieben.

Bei der erfindungsgemäßen Ausgestaltung ist wenigstens der eine Lagerkörper der beiden miteinander zusammenwirkenden Lagerkörper des Schwenklagers segmentiert. Die dadurch gebildeten Lagersegmente sind durch ein plastisches oder elastisches Mittel, z. B. einen Zwischenstoff, am zugehörigen Lagerkörper abgestützt oder gekoppelt. Die Lagersegmente erfüllen dabei die Anforderungen an die Formgenauigkeit durch ihre Lage, wobei sie aufgrund der elastischen oder plastischen Abstützung eine selbsttätige Anpassung an die Form der Lagerfläche des jeweiligen Gegenlagerkörpers ermöglichen. Bei dem plastischen Mittel kann es sich um einen solchen Stoff handeln, der nur vorübergehend plastisch ist, z. B. bei der Montage des Gegenlagerkörpers oder eines entsprechenden Modells, und dann in einer Position der Lagersegmente erhärtet, in der diese an der Gegenlagerfläche des Gegenlagerkörpers anliegen. Bei einem elastischen Mittel sind die Lagersegmente in der Lage, sich ständig an die Form der Gegenlagerfläche anzupassen. Sowohl bei einem plastischen als auch bei einem elastischen Mittel erfüllen die Lagersegmente die Anforderungen an die Formgenauigkeit durch ihre gesamte Lagegenauigkeit.

Als plastischer Zwischenstoff eignet sich z. B ein solcher Stoff, der vorübergehend plastisch ist und nach der Montage bzw. der Anlage der Gegenlagerfläche des zugehörigen Gegenlagerkörpers an den Lagersegmenten erhärtet, wodurch diese Lagersegmente fixiert werden und die Form der zugehörigen "Lagerfläche" vorgeben.

Dabei ist es im Rahmen der Erfindung möglich, daß die Lagersegmente unmittelbar aneinander anliegen und dadurch eine Führung bilden oder einen Abstand voneinander aufweisen und in einer zugehörigen Führung gelagert sind.

Es ist im Rahmen der Erfindung auch möglich die Anordnung so zu treffen, daß die Lagersegmente bezüglich ihrer Position zur Gegenlagerfläche einstellbar und in der jeweilig eingestellten Position feststellbar oder gegen eine Bewegung von der Gegenlagerfläche weg begrenzt sind. Dies kann in einfacher und vorteilhafterweise hydraulisch erfolgen, nämlich durch eine Hydraulikflüssigkeit, die der Gegenlagerfläche abgewandten Enden der Lagersegmente beaufschlagt, wodurch zum einen die Anlage der Lagersegmente an der Gegenlagerfläche und zum anderen eine Entfernung der Lagersegmente von der Gegenlagerfläche verhindert ist.

Bei der erfindungsgemäßen Ausgestaltung ist der eine Lagerkörper segmentiert, so daß zwischen den Lagersegmenten dann, wenn diese aneinanderliegen, eine Fuge besteht, oder dann, wenn diese einen Abstand voneinander aufweisen, ein Spalt besteht. Hierdurch ist die Unabhängigkeit der Lagersegmente voneinander gewährleistet.

Im Rahmen der Erfindung kann es sich bei dem Mittel um Zwischenelemente handeln, wobei ein solches Zwischenelement elastisch oder plastisch sein kann oder jeweils zwei Zwischenelemente vorgesehen sein können, von denen eins im vorbeschriebenen Sinne plastisch und das andere elastisch sein kann. Dabei können die Zwischenelemente aus Kunststoff gebildet sein.

Durch die Verwendung von Matrixelementen, die sowohl den Zwischenstoff bzw. die Zwischenelemente als auch die Lagersegmente aufnehmen, sind preiswerte und hinsichtlich der Geometrie vielfältige Lösungen möglich.

Die Erfindung ermöglicht im Bereich der zugehörigen Lagerfläche einen ausreichend großen Traganteil bei guter Formgenauigkeit in allen Schwenkpositionen wobei eine aufwendige und teuere Fertigung vermieden wird. Deshalb eignet sich die Erfindung sehr gut für schwierig bearbeitbare Materialien, inbesondere Keramiken und/oder für eine konkave Form der Lagerflache, die schwieriger herzustellen ist als eine konvexe Form.

In den Unteransprüchen sind Merkmale enthalten, die die elastischen oder plastischen Eigenschaften der Lagersegmente verbessern, eine einfache Anordnung der Lagersegmente ergeben und eine einfache Herstellung bei Gewährleistung einer einfachen und kleinen Bauweise ermöglichen.

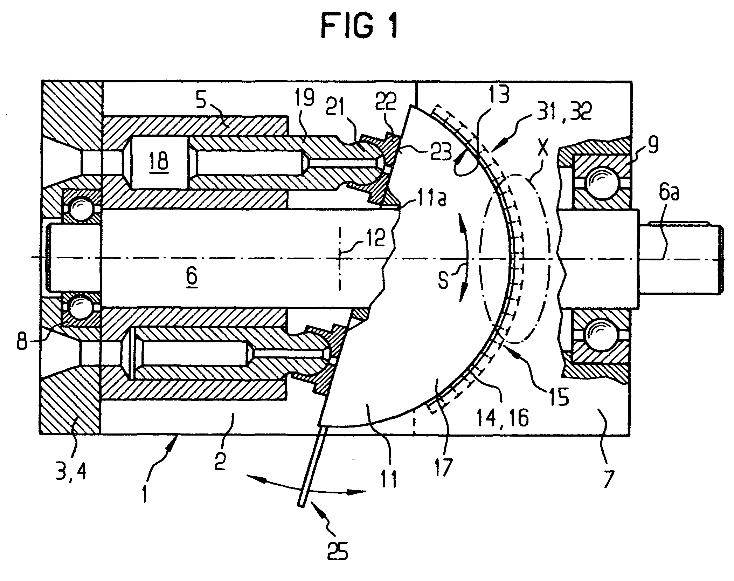

Nachfolgend werden die Erfindung und weitere durch sie erzielbare Vorteile anhand von vorteilhaften Ausführungsbeispielen und Zeichnungen näher erläutert. Es zeigen
- Fig. 1: eine erfindungsgemäße Axialkolbenmaschine der Schrägscheibenbauart in der Seitenansicht, teilweise geschnitten;
- Fig. 2: die in Fig. 1 mit X gekennzeichneter Einzelheit in vergrößerter und in der Zeichnungsebene um 90° verdrehter Darstellung;
- Fig. 3: die Einzelheit X in abgewandelter Ausgestaltung;
- Fig. 4: einen Lagerkorper nach Fig. 3 in der Draufsicht;
- Fig. 5: die Einzelheit X in weiter abgewandelter Ausgestaltung;
- Fig. 6: einen Lagerkörper des Schwenklagers nach Fig. 5 in der Draufsicht;
- Fig. 7: die Einzelheit X in weiter abgewandelter Ausgestaltung;
- Fig. 8: die Einzelheit X in weiter abgewandelter Ausgestaltung;
- Fig. 9: ein Lagersegment in perspektivischer Darstellung;
- Fig. 10: ein Lagersegment in abgewandelter Ausgestaltung in perspektivischer Darstellung; und
- Fig. 11: ein Lagersegment in weiter abgewandelter Ausgestaltung in perspektivischer Darstellung.

Die Axialkolbenmaschine in Schwenkscheibenbauart weist ein vereinfacht dargestelltes Gehause 1 auf, dessen Gehäuseinnenraum 2 an seinem einen Ende durch einen sogenannten Anschlußblock 3 mit einer Steuerscheibe 4 verschlossen ist. An der Innenseite der Steuerscheibe 4 liegt eine Zylindertrommel 5 an, die drehfest auf einer Triebwelle 6 gelagert ist, die ein dem Anschlußblock 3 gegenüberliegend angeordnetes Gehäuseteil 7 in einem Loch nach außen durchsetzt. Die Triebwelle 6 ist mittels Wälzlagern 8, 9 drehbar im Gehäuse 1 gelagert. Die Drehachse ist mit 6a bezeichnet. Zwischen der Zylindertrommel 5 und dem Gehäuseteil 7 befindet sich im Gehäuseinnenraum 2 eine Schragscheibe 11, die von der Triebwelle 6 in einem Lochfreiraum 11a durchsetzt wird, und die bezüglich der Drehachse 13 undrehbar jedoch um eine rechtwinklig zur Drehachse 6a verlaufende Schwenkachse 12 in einem Schwenklager 13 schwenkbar im Gehäuseinnenraum 2 gelagert ist. Das Schwenklager 13 ist ein Gleitlager mit einer zylinderabschnittförmigen konkaven Lagerfläche 14 an einem durch das Gehäuseteil 7 gebildeten ersten Lagerkörper 15 und einer zylinderabschnittförmigen konvexen Lagerfläche 16 an einem durch die Schrägscheibe 11 gebildeten Lagerkörper 17. Die Lagerflächen 14, 16 können sich über die gesamte Querabmessung des Gehauseteils 7 und/oder der Schragscheibe 11 erstrecken, oder es können auch zu beiden Seiten des Lochfreiraums 11a jeweils ein Schwenklager 13 mit vorbeschriebenen Lagerflächen 14, 16 schmaler Bauweise angeordnet sein.

In der Zylindertrommel 5 sind mehrere sich etwa in der Längsrichtung der Drehachse 6a erstreckende Arbeitszylinder 18 in Form von Bohrungen in Umfangsrichtung verteilt angeordnet, in denen Kolben 19 längs verschiebbar gelagert sind, deren der Schrägscheibe 11 zugewandte Kolbenköpfe 21 durch mit den Kolbenköpfen 21 schwenkbar verbundene Gleitschuhe 22 an einer ebenen Gleitfläche 23 der Schrägscheibe 11 anliegen und durch eine vereinfacht dargestellte Rückhalteeinrichtung 24 an der Gleitfläche 23 in an sich bekannter Weise gehalten sind.

Die Axialkolbenmaschine weist eine vereinfacht dargestellte und mit 25 bezeichnete Durchsatzvolumen-Einstellvorrichtung auf, die an der Schrägscheibe 11 angreift, und mit der die Schrägscheibe 11 zur Vergrößerung oder Verringerung des Durchsatzvolumens in unterschiedliche Stellungen schwenkbar und in der jeweiligen Stellung feststellbar ist.

Der Lagerkorper 15 des Gehäuses 1 und/oder der Lagerkörper 17 der Schrägscheibe 11 ist jeweils im Bereich der zugehörigen Lagerfläche 14, 16 segmentiert. Die hierdurch gebildeten Lagersegmente 31 sind durch ein plastisches oder elastisches Mittel 32 am zugehörigen Lagerkorper 15, 17 abgestützt und somit gehalten, wobei sie mit ihren dem Lagerkörper 15, 17 abgewandten freien Stirnflächen 31a Lagerteilflächen 14a der zugehörigen Lagerflache 14 bilden können. Bei den vorliegenden Ausführungsbeispielen ist nur die Lagerfläche 14 des Lagerkörpers 15 segmentiert.

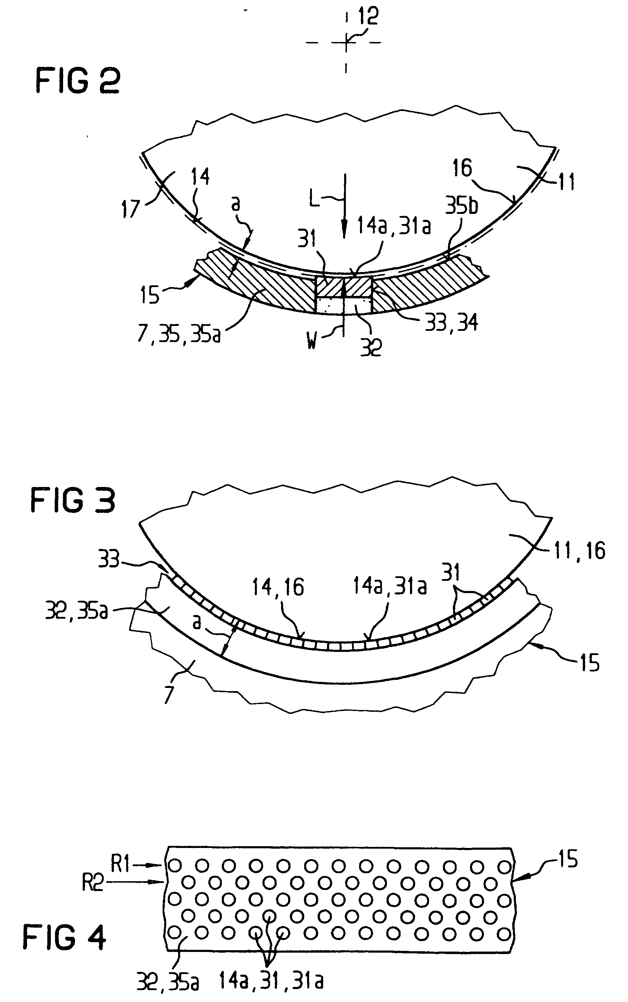

Die Lagersegmente 31 sind in einer radialen Führung 33 verschiebbar geführt, wobei diese Führung 33 durch Führungslöcher 34 gebildet sein kann, in denen die Lagersegmente 31 mit geringem Bewegungsspiel verschiebbar geführt sind, und auf dem ebenfalls darin angeordneten Mittel 32 abgestützt, siehe Fig. 2, die aus Vereinfachungsgrunden nur ein Lagersegment 31 zeigt.

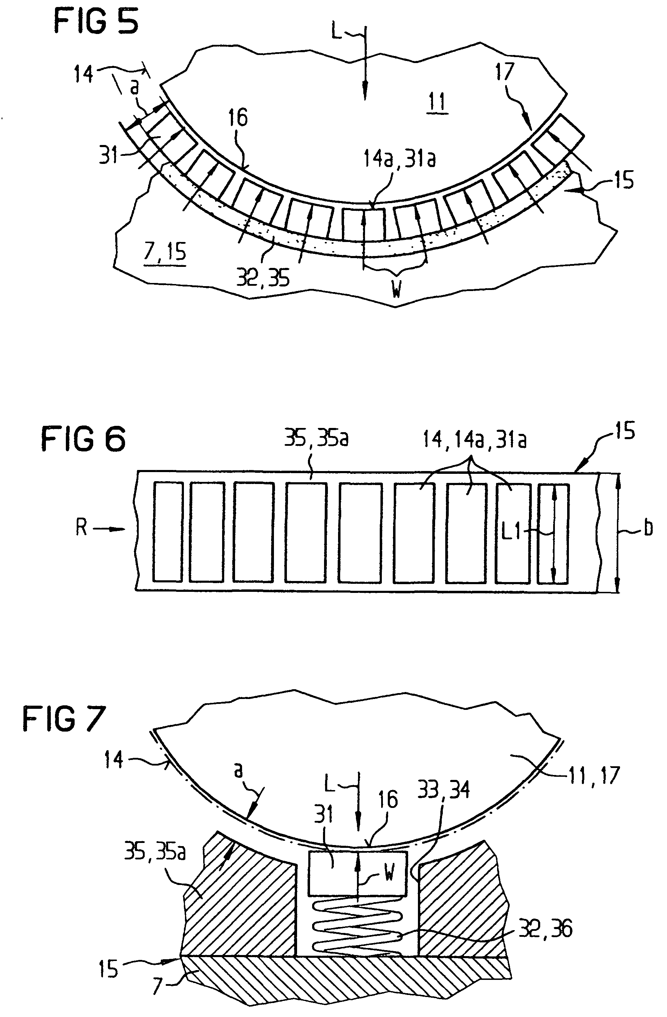

Die Lagersegmente 31 können im Bereich der zugehörigen Lagerfläche 14, 16 wahllos verteilt oder in geordneten Positionen, insbesondere in Reihen R1, R2 angeordnet sein, wobei wenigstens eine, quer zur Schwenkachse 12 verlaufende Reihe R vorgesehen sein kann, und wobei die Lagersegmente 31 sich längs der Schwenkachse 12 etwa über die gesamte Breite b der zugehörigen Lagerflache 14, 16 erstrecken und quer zur Schwenkachse 12 nebeneinander angeordnet sein können und die Reihe R bilden können, siehe Fig 6. Die Lagersegmente 31 können gemäß Fig. 4 auch in mehreren, quer und längs der Schwenkachse 12 verlaufenden Reihen R1, R2 angeordnet sein, wobei die Lagersegmente 31 in einander benachbarten Reihen versetzt zueinander angeordnet sein können. Die Fuhrungslocher 34 können im Lagerkörper 15 oder in einem daran befestigten innen oder auch außen zylinderabschnittförmigen Wandteil 35 angeordnet sein, das auch eine Schicht auf dem Lagerkörper 15 sein kann und eine Matrix 35a bildet. Die Schwenkrichtungen der Schrägscheibe 11 sind durch einen Doppelpfeil S verdeutlicht.

Die Führung 33 kann auch dadurch gebildet sein, daß die Lagersegmente 31 seitlich mit Bewegungsspiel aneinander angrenzen, so daß jeweils seitlich benachbarte Lagersegmente 31 die Führung 33 für ein dazwischen angeordnetes Lagersegment 31 bilden. Hierdurch können besonders eingearbeitete Führungslöcher 34 gemäß Fig. 2 entfallen. Es ist auch möglich, die Matrix 35a durch das plastische oder elastische Mittel 32 zu bilden im Sinne des Wandteils 35, wie es Fig. 5 zeigt. Es ist außerdem möglich, die Lagersegmente 31 an ihrer dem zugehörigen Lagerkörper 15 zugewandten Seite mit dem Mittel 32 oder der Matrix 35a oder der Schicht zu verbinden, z. B. durch Kleben, so daß die Lagersegmente 31 mit den Mittel 32 oder der Matrix 35a oder der Schicht eine fest verbundene Einheit bilden. Bei einer solchen Ausgestaltung wird die Führung 33 durch das Material der Matrix 35a oder der Schicht gebildet, so daß es an den Seitenflächen der Lagersegmente 31 keiner Führung, z. B. keiner Führungslöcher 34, bedarf und deshalb die Lagersegmente 31 einen seitlichen Abstand im Sinne einer Fuge voneinander aufweisen können. Es ist auch möglich, das Wandteil 35 oder die Matrix 35a in der Längsrichtung der Schwenkachse 12 und/oder in der Schwenkrichtung (siehe Doppelpfeil S) auf eine andere Weise am Lagerkörper 15 zu sichern, z. B. formschlüssig, durch seitliche nicht dargestellte Begrenzungen oder Anschläge. Bei einer Ausbildung der Matrix 35a als aufgetragene Schicht kann die Befestigung am Lagerkörper 15 durch den Schichtauftrag und die dadurch hervorgerufene Verbindung mit dem Lagerkorper 15 gebildet sein.

Es ist auch möglich, das elastische Mittel 32 durch eine Druckfeder 36 zu bilden, die bei der Ausgestaltung nach Fig. 7 durch eine Wendelfeder ausgebildet ist und mit dem zugehörigen Lagersegment 31 in einem zugehörigen Führungsloch 34 in der Matrix 35a oder im Lagerkörper 15 angeordnet sein kann.

Zwischen der Lagerfläche 16 der Schrägscheibe 11 und der ihr zugewandten Fläche 35b des Lagerkorpers 15 oder des Wandteils 35 oder der Matrix 35a ist ein Abstand a vorhanden, mit dem die Lagersegmente vorragen.

Bei einer Ausgestaltung mit einem elastischen Mittel 32 ist dessen Elastizität oder Elastizitätsmodul so groß bemessen, daß die beispielhaft als gegen den Lagerkörper 17 gerichtete Pfeile dargestellten Widerstandskräfte W vorzugsweise größer bemessen sind, als die vom Schwenklager 13 aufzunehmende Last, die durch den Pfeil L verdeutlicht ist. Aufgrund der Elastizität des oder der elastischen Mittel 32 ist die durch die Lagerteilflächen 14a gebildete Lagerfläche 14 elastisch nachgiebig und sie kann im Funktionsbetrieb der Axialkolbenmaschine je nach Größe der Last L mehr oder weniger zum Lagerkörper 15 hin verschoben werden, z. B. bei Lastspitzen. Dies ist unerheblich, da hierdurch das Fördervolumen oder die Leistung der Axialkolbenmaschine nicht verändert wird.

Die Summe der elastischen Widerstandskräfte W kann jedoch auch kleiner sein als die Last L oder als Belastungsspitzen. In einem solchen Fall können sich die Lagersegmente 31 soweit zum Lagerkörper 15 hin verlagern, daß das elastische Mittel 32 einen Bewegungsanschlag bildet oder die Lagersegmente 31 soweit in die Führungslöcher 34 eintauchen, daß die dem Lagerkörper 17 zugewandte Fläche 35b des Wandteils 35 oder der Matrix 35a die Lagerfläche 16 zusätzlich bildet. Hierdurch können insbesondere bei Belastungsspitzen zusätzliche Lagerflächen geschaffen werden.

Das plastische Mittel 32 kann ein solches Material sein, daß vorübergehend plastisch ist und nach einer Anordnung des Lagerkörpers 17 in der Lageposition, z. B. bei der Montage, erhärtet. Dabei erfolgt eine selbsttätige Positionierung der Lagersegmente 31 durch deren Lageanpassung an die Lagerflache 16.

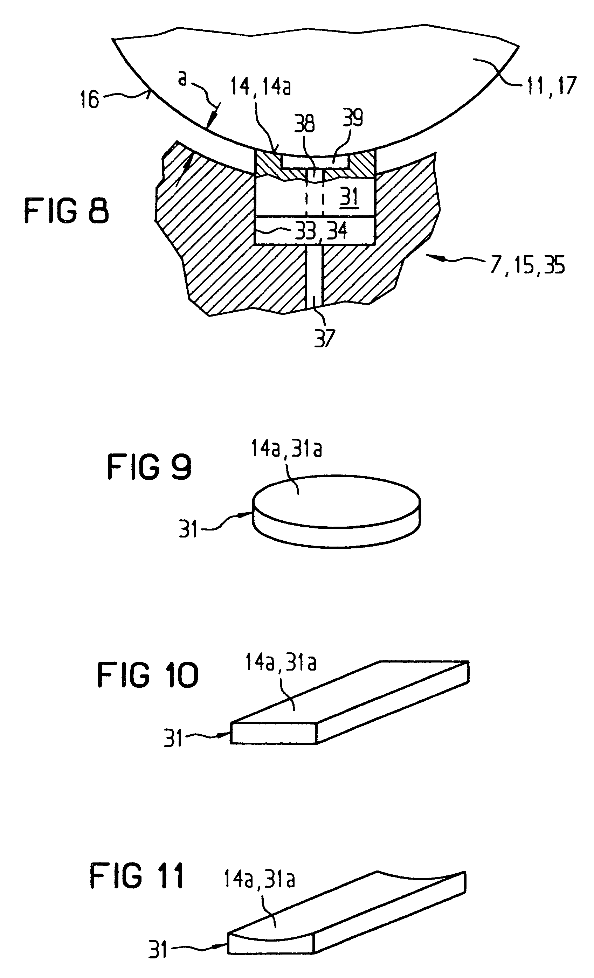

Beim Ausführungsbeispiel nach Fig. 8 ist das plastische oder elastische Mittel 32 durch ein hydraulisches Medium, insbesondere durch das hydraulische Mittel der Axialkolbenmaschine, gebildet, das unter Druck steht und die in den Führungslöchern 34 angeordneten Lagersegmente 31 gegen den Lagerkörper 15 abstützt und durch mit den Fuhrungslöchern 34 verbundene Kanäle 37 eines zugehörigen hydraulischen Versorgungssystems zuführbar ist. Ein hydraulisches Medium kann ein elastisches Mittel 32 bilden, wenn dem zugehörigen hydraulischen Versorgungssystem ein Druckspeicher, z. B. in Form eines elastischen Balges, zugeordnet ist.

Wenn in den Lagersegmenten 31 jeweils ein Durchgangskanal 38 angeordnet ist, der vorzugsweise zentral in der der Form der Lagerflache 16 angepaßten Lagerteilfläche 14, vorzugsweise im Bereich einer Ausnehmung 39, mündet, dann erfolgt nicht nur eine Schmierung der Lagerflächen 14, 16, sondern auch eine Verringerung der Flächenpressung durch eine hydrostatische Druckentlastung.

Die Figuren 9 bis 11 zeigen verschiedene Querschnittsformen für die Lagersegmente 31, die vorzugsweise von prismatischer Form sind. Fig. 8 zeigt eine kreisrunde Querschnittsform auf, die sich vorzugsweise für gebohrte Führungslöcher 34 eignet. Fig. 10 zeigt eine rechteckige Querschnittsform, die sich insbesondere für eine Ausgestaltung gemäß Fig. 6 eignet, bei der die größere mit L1 bezeichnete Abmessung parallel zur Schwenkachse 13 gerichtet ist.

Bei allen Ausführungsbeispielen kann die einen Teil der Lagerfläche 14 bildende freie Stirnfläche 31a der Lagersegmente eben oder an die Krümmung der Lagerfläche 14 angepaßt sein und somit dieser Krümmung entsprechen. Im ersteren Fall entsteht beim vorliegenden Ausführungsbeispiel lediglich ein linienförmiger Flächenkontakt zwischen den Lagersegmenten 31 und der Lagerfläche 16 des Lagerkörpers 17. Im zweiten Fall (Fig. 11) besteht zwischen diesen Teilen ein Flachenkontakt, wodurch die Flächenpressung wesentlich verringert und optimal ist.

Im Rahmen der Erfindung können die Lagersegmente 31 in entsprechend umgekehrter Weise anstatt am Lagerkörper 15 am Lagerkörper 17 angeordnet sein. Es ist auch möglich, beide Lagerkörper 15, 17 mit Lagersegmenten 31 entsprechend auszubilden.

Eine Ausgestaltung bei der nur einer der Lagerkorper 15, 17 mit Lagersegmenten 31 ausgebildet ist, ist besonders vorteilhaft, da der Lagerkörper 15, 17 der keine Lagersegmente 31 aufweist durch seine Lagerfläche 14 oder 16 eine starre Lagerflächenform vorgibt, an die sich die Lagersegmente 31 anpassen.

## Patentansprüche

1. Axialkolbenmaschine mit einem Gehäuse (1), in dem mehrere Kolben (7) in Zylinderbohrungen (5) axial verschiebbar gelagert und durch eine Schrägscheibe (11) verschiebbar sind, die in einem Schwenklager (13) mit einem ersten am Gehäuse (1) angeordneten Lagerkorper (15) und einem zweiten, an der Schrägscheibe (11) angeordneten Lagerkörper (17) um eine quer zur Drehachse (6a) der Axialkolbenmaschine verlaufenden Schwenkachse (12) schwenkbar gelagert ist,
**dadurch gekennzeichnet,**
**daß** der Lagerkörper (15) des Gehäuses (1) oder der Lagerkörper (17) der Schrägscheibe (11) Lagersegmente (31) aufweist, die durch ein plastisches oder elastisches Mittel (32) am zugehörigen Lagerkörper (15) abgestützt sind.

2. Axialkolbenmaschine nach Anspruch 1,
**dadurch gekennzeichnet,**
**daß** die Lagersegmente (31) jeweils in einer am zugehörigen Lagerkörper (15) oder am Mittel (32) angeordneten Führung (33) bezüglich der Schwenkachse (12) radial geführt sind.

3. Axialkolbenmaschine nach Anspruch 1 oder 2,
**dadurch gekennzeichnet,**
**daß** das Mittel (32) durch eine am zugehörigen Lagerkörper (15) angeordnete Matrix (35a) oder Schicht gebildet ist.

4. Axialkolbenmaschine nach Anspruch 2 oder 3,
**dadurch gekennzeichnet,**
**daß** die Fuhrung (33) durch ein Führungsloch (34) im zugehörigen Lagerkörper (15) oder in der Matrix (35) gebildet ist.

5. Axialkolbenmaschine nach einem der vorherigen Ansprüche,
**dadurch gekennzeichnet,**
**daß** die Lagersegmente (31) jeweils seitlich mit Bewegungsspiel aneinander angrenzen oder einen Abstand voneinander aufweisen.

6. Axialkolbenmaschine nach einem der vorherigen Ansprüche,
**dadurch gekennzeichnet,**
**daß** die Lagersegmente (31) in einer oder mehreren jeweils parallel zur Schwenkachse (12) oder in der Schwenkrichtung (S) verlaufenden Reihen (R, R1, R2) angeordnete sind.

7. Axialkolbenmaschine nach Anspruch 1,
**dadurch gekennzeichnet,**
**daß** die Lagerkörper (15, 17) oder die Matrix (35a) und der gegenüberliegende Lagerkörper (17) einen Abstand (a) voneinander aufweisen, den die Lagersegmente (31) überbrücken.

8. Axialkolbenmaschine nach einem der vorherigen Ansprüche,
**dadurch gekennzeichnet,**
**daß** das Mittel (32) ein plastischer erhärtender oder aushärtender Stoff oder ein elastischer Stoff oder eine Druckfeder (36), insbesondere eine Wendelfeder, oder ein hydraulisches Medium ist.

9. Axialkolbenmaschine nach einem der vorherigen Ansprüche,
**dadurch gekennzeichnet,**
**daß** die freie Stirnfläche (31a) der Lagesegmente (31) eben ist oder entsprechend der Form der Lagerfläche (16) des gegenüberliegenden Lagerkörpers (17) gekrümmt ist.

10. Axialkolbenmaschine nach Anspruch 9,
**dadurch gekennzeichnet,**
**daß** ein mit dem hydraulischen Medium in Verbindung stehender Kanal (38) sich jeweils durch die Lagersegmente (31) erstreckt und in deren Stirnfläche (31a) mündet, insbesondere in einer Ausnehmung (39) der Stirnfläche (31a) mündet.

## Claims

1. Axial piston machine with a housing (1), in which a plurality of pistons (19) are mounted axially displaceably in cylinder bores (5) and are displaceable by a swash plate (11) which is mounted, pivotably about a pivot axis (12) running transversely to the axis of rotation (6a) of the axial piston machine, in a pivot bearing (13) having a first bearing body (15) arranged on the housing (1) and a second bearing body (17) arranged on the swash plate (11),
**characterised**
**in that** the bearing body (15) of the housing (1) or the bearing body (17) of the swash plate (11) has bearing segments (31) which are supported on the associated bearing body (15) by a plastic or elastic means (32).

2. Axial piston machine according to Claim 1,
**characterised**
**in that** the bearing segments (31) are each radially guided with respect to the pivot axis (12) in a guide (33) arranged on the associated bearing body (15) or on the means (32).

3. Axial piston machine according to Claim 1 or 2,
**characterised**
**in that** the means (32) is formed by a matrix (35a) or layer arranged on the associated bearing body (15).

4. Axial piston machine according to Claim 2 or 3,
**characterised**
**in that** the guide (33) is formed by a guide hole (34) in the associated bearing body (15) or in the matrix (35).

5. Axial piston machine according to one of the preceding claims,
**characterised**
**in that** the bearing segments (31) each laterally adjoin one another with movement play or have a space between one another.

6. Axial piston machine according to one of the preceding claims,
**characterised**
**in that** the bearing segments (31) are arranged in one or more rows (R, R1, R2) each running parallel to the pivot axis (12) or in the pivoting direction (S).

7. Axial piston machine according to Claim 1,
**characterised**
**in that** the bearing bodies (15, 17) or the matrix (35a) and the opposite bearing body (17) have a space (a) between one another which is bridged by the bearing segments (31).

8. Axial piston machine according to one of the preceding claims,
**characterised**
**in that** the means (32) is a plastic hardening or setting material or an elastic material or a compression spring (36), in particular a helical spring, or a hydraulic medium.

9. Axial piston machine according to one of the preceding claims,
**characterised**
**in that** the free front face (31a) of the bearing segments (31) is plane or is curved in accordance with the shape of the bearing surface (16) of the opposite bearing body (17).

10. Axial piston machine according to Claim 9,
**characterised**
**in that** a channel (38) connected to the hydraulic medium extends through each of the bearing segments (31) and opens into the front face (31a) thereof, in particular into a recess (39) of the front face (31a).

## Revendications

1. Machine à pistons axiaux comportant un carter (1) dans lequel plusieurs pistons (7) sont placés dans des alésages (5) de manière à se déplacer axialement et pouvant se déplacer à travers un disque incliné (11) qui est positionné dans un palier pivotant (13), comportant un premier corps de palier (15) disposé contre le carter (1) et un deuxième corps de palier (17) disposé contre le disque incliné (11), de manière à pivoter autour d'un axe de pivotement (12) transversal à l'axe de rotation (6a) de la machine à pistons axiaux,
**caractérisée en ce que**
le corps de palier (15) du carter (1) ou des corps de palier (17) du disque incliné (11) présente des segments de palier (31) qui s'appuient sur le corps de palier (15) correspondant grâce à un moyen plastique ou élastique (32).

2. Machine à pistons axiaux selon la revendication 1,
**caractérisée en ce que**
les segments de palier (31) sont chacun guidés radialement dans une glissière (33) disposée contre le corps de palier (15) correspondant ou contre le moyen (32) par rapport à l'axe de pivotement.

3. Machine à pistons axiaux selon la revendication 1 ou 2,
**caractérisée en ce que**
le moyen (32) est constitué d'une matrice (35a) ou d'une couche disposée contre le corps de palier (15) correspondant.

4. Machine à pistons axiaux selon la revendication 2 ou 3,
**caractérisée en ce que**
la glissière (33) est constituée d'un trou de guidage (34) dans le corps de palier (15) correspondant ou dans la matrice (35).

5. Machine à pistons axiaux selon l'une quelconque des revendications précédentes,
**caractérisée en ce que**
les segments de palier (31) se jouxtent chacun sur les côtés avec un jeu de mouvement ou présentent une distance l'un par rapport à l'autre.

6. Machine à pistons axiaux selon l'une quelconque des revendications précédentes,
**caractérisée en ce que**
les segments de palier (31) sont disposés sur une ou plusieurs rangées (R, R1, R2) parallèles à l'axe de pivotement (12) ou orientées dans le sens de pivotement (S).

7. Machine à pistons axiaux selon la revendication 1,
**caractérisée en ce que**
les corps de palier (15, 17) ou la matrice (35a) et le corps de palier (17) opposé sont à une distance (a) l'un de l'autre que les segments de palier (31) surmontent.

8. Machine à pistons axiaux selon l'une quelconque des revendications précédentes,
**caractérisée en ce que**
le moyen (32) est une matière plastique qui se solidifie ou durcit ou bien une matière élastique ou bien un ressort de pression (36), en particulier un ressort spiral ou bien un fluide hydraulique.

9. Machine à pistons axiaux selon l'une quelconque des revendications précédentes,
**caractérisée en ce que**
la face avant libre (31a) des segments de palier (31) est plane ou recourbée en fonction de la forme de la surface d'appui (16) du corps de palier (17) opposé.

10. Machine à pistons axiaux selon la revendication 9,
**caractérisée en ce que**
un canal (38) relié au fluide hydraulique s'étend à travers les segments de palier (31) et débouche dans la face avant (31a) de ces derniers, en particulier débouche dans un évidemment (39) de la face avant (31a).
